Europäisches Patentamt

European Patent Office

Office européen des brevets

(11) Veröffentlichungsnummer: **0 589 390 A1**

# (12) EUROPÄISCHE PATENTANMELDUNG

(21) Anmeldenummer: **93115101.3**

(22) Anmeldetag: **20.09.93**

(51) Int. Cl.5: **H04L 27/22**, H04B 10/14

(30) Priorität: **25.09.92 DE 4232206**

(43) Veröffentlichungstag der Anmeldung:
**30.03.94 Patentblatt 94/13**

(84) Benannte Vertragsstaaten:
**DE FR GB NL**

(71) Anmelder: **SIEMENS AKTIENGESELLSCHAFT
Wittelsbacherplatz 2
D-80333 München(DE)**

(72) Erfinder: **Noè, Reinhold, Prof. Dr.
Helmerner Weg 2
D-33100 Paderborn(DE)**

(54) **Empfänger für phasenumgetastete Trägersignale.**

(57) 2.1 Optische PSK-Heterodynsysteme können unter Umständen anspruchsvolle Bitmuster, wie z.B. eine $2^{15}-1$ Pseudozufallsfolge aufgrund bitmusterabhängiger Phasenstörungen in dem im Empfänger rückgewonnenen Trägerfrequenzsignal nicht übertragen werden oder benötigen dafür zumindest Laser extrem schmaler Linienbreiten, die beispielsweise mit externen Resonatoren zu realisieren sind.

2.2 Zur Abhilfe weist ein derartiger Empfänger eine Einrichtung zur Unterdrückung der Amplitude des rückgewonnenen Trägerfrequenzsignals während des zeitlichen Abstandes zwischen aufeinanderfolgenden Sendesymbolen der dem Empfänger zugeführten Datensignale auf.

FIG 1

Die Erfindung betrifft einen Empfänger für modulierte Trägerfrequenzsignale nach dem Oberbegriff des Patentanspruchs 1.

In der optischen Nachrichtentechnik werden modulierte Daten-Trägerfrequenzsignale, die durch digitale Modulation eines Trägerfrequenzsignals bezüglich eines insbesondere zyklischen Parameters dieses Trägerfrequenzsignals erzeugt sind, verwendet. Der Parameter kann beispielsweise die Amplitude, die Frequenz oder die Phase des unmodulierten Trägerfrequenzsignals sein. Binäre Phasenmodulation bzw. PSK-Modulation (siehe beispielsweise A. Schöpflin, Electronics Lett. Vol. 26, 1990, No. 4, S. 255-256, T. Chikama et al, J. Lightwave Technology, Vol. 8, 1990, No. 3, S. 309-322 und R.C. Steele et al, Proc. SPIE, Boston, MA, Vol. 988, S. 302-309, 1988) erlaubt es, höchste Empfängerempfindlichkeiten zu erzielen. Ein Datensignal wird in elektrischer Form einem optischen Sender zugeführt, in welchem das elektrische Datensignal in ein optisches Datensignal auf einem optischen Trägerfrequenzsignal umgewandelt, d.h. in ein optisches Daten-Trägerfrequenzsignal.

Das optische Daten-Trägerfrequenzsignal wird beispielsweise einem optischen Heterodynempfänger zugeführt, in welchem das optische Daten-Trägerfrequenzsignal in einem optischen Koppler, beispielsweise einem optischen Richtkoppler, mit einem optischen Lokaloszillatorsignal fester Frequenz überlagert wird. Die beiden einander überlagerten optischen Signale werden in einem oder zwei Photodetektoren vom optischen in den Mikrowellenbereich heruntergemischt, wobei ein moduliertes Trägerfrequenzsignal in Form eines elektrischen Zwischenfrequenzsignals entsteht. Nach Verstärkung dieses Zwischenfrequenzsignals in einem Verstärker erfolgt die Demodulation des modulierten Zwischenfrequenzsignals durch synchrone Multiplikation in einem Multiplizierer mit einem rückgewonnenen elektrischen Trägerfrequenzsignal.

Im Falle eines PSK-Datensignals ist das Zwischenfrequenzsignal ein PSK-moduliertes Signal.

Die modulierten Trägerfrequenzsignale bilden in allen Fällen eine Folge von durch einen bestimmten zeitlichen Abstand voneinander getrennten Sendesymbolen $B_i^j$, die aus einer vorbestimmten Anzahl $m > 2$ vorbestimmter unterschiedlicher Sendesymbole $B_1$, $B_2$, ....$B_m$ ausgewählt sind. Der tiefgestellte Index i gibt an, welches Symbol aus den m-Symbolen $B_1$ bis $B_m$ ausgewählt ist, d.h. i ist eine beliebige Zahl aus der Menge {1, 2, ..., m}, während der hochgestellte Index j die laufende Nummer j = 1, 2, 3, ... des ausgewählten Symbols $B_i$ in der Folge angibt. Jedes der m unterschiedlichen Symbole $B_1$ bis $B_m$ ist durch je einen zugeordneten Parameterwert $Ph_1$ bis $Ph_m$ des Parameters Ph repräsentiert. Benachbarte Sendesymbole

$B_i^j$ und $B_k^{j+1}$, wobei i, k beliebige Zahlen aus der Menge {1, 2, ..., m} sind, sind durch den bestimmten zeitlichen Abstand $\Delta t_0$ voneinandergetrennt. Im Fall von PSK-modulierten Trägerfrequenzsignalen ist die Frequenz dieser Signale während der Dauer $\Delta t_1$ jedes Sendesymbols konstant und das Signal unterscheidet sich von Sendesymbol zu Sendesymbol allenfalls durch verschiedene Phasenwerte, abhängig davon, ob sich die Phasenwerte dieser Symbole voneinander unterscheiden oder nicht. Ein Übergang von einem Phasenwert in einem Sendesymbol in einen anderen Phasenwert eines nächsten Sendesymbols findet in dem bestimmten zeitlichen Abstand $\Delta t_0$ zwischen diesen Sendesymbolen statt. In diesem zeitlichen Abstand $\Delta t_0$ kann in Abhängigkeit von der Art des Übergangs eine auf diesen Abstand beschränkte Erhöhung oder Erniedrigung der Frequenz des modulierten Trägerfrequenzsignals auftreten. Während des Übergangs behält das modulierte Trägerfrequenzsignal seine volle Amplitude, verändert aber seine Phase. Falls alle Phasenwechsel durch Frequenzänderungen in der gleichen Richtung erzeugt werden, liegt unipolare Phasenmodulation vor, im anderen Fall bipolare Phasenmodulation (siehe dazu beispielsweise T. Chikama et al, J. Lightwave Technology, Vol. 8, 1990, No. 3, S. 309-322).

Zur Rückgewinnung des Trägerfrequenzsignals wird das modulierte Trägerfrequenzsignal beispielsweise einem nichtlinearen Element zugeführt, das normalerweise aus einem Quadrierer besteht, in welchem die Frequenz des modulierten Trägerfrequenzsignals verdoppelt wird. Während der zeitlichen Abstände $\Delta t_0$ zwischen den Sendesymbolen ist die Frequenz des Ausgangssignals des Quadrierers verschieden von der Frequenz des modulierten Trägerfrequenzsignals während der Dauer $\Delta t_1$ der Sendesymbole und während der zeitlichen Abstände $\Delta t_0$ zwischen den Sendesymbolen, in denen keine Phasenverschiebung auftritt. Dies führt zu einem Phasenjitter, der in abgeschwächter Form auch noch nach einem zur Verbesserung des Signal-Rausch-Verhältnisses des Ausgangssignals des Quadrierers eingesetzten Filter und nach einem gegebenenfalls eingesetzten Begrenzerverstärker auftritt. Anstelle dieses Filters und auch des Begrenzerverstärkers kann eine PLL eingesetzt werden, was an der Problematik aber nichts prinzipielles ändert.

Das Signal aus dem genannten Filter und dem Begrenzerverstärker bzw. der PLL wird in einem Frequenzteiler durch zwei geteilt, wodurch das gewünschte rückgewonnene Trägerfrequenzsignal entsteht.

Bekanntermaßen wird das PSK-modulierte Trägerfrequenzsignal durch Multiplikation mit dem rückgewonnenen Trägerfrequenzsignal demoduliert. Zur Phasenanpassung muß in der Regel entweder das modulierte Trägerfrequenzsignal oder das wiedergewonnene Trägerfrequenzsignal ein Laufzeitglied oder einen Phasenschieber durchlaufen. Üblicherweise wird zu diesem Zweck das modulierte Trägerfrequenzsignal um eine Zeit verzögert, die näherungsweise gleich der Signallaufzeit im Signalpfad ist, in welchem das Trägerfrequenzsignal aus dem modulierten Trägerfrequenzsignal rückgewonnen wird, und die außerdem eine Phasenanpassung im Multiplizierer gewährleistet. Wegen der gleichen Laufzeiten hebt sich ein Phasenrauschen der optischen Sender zur Erzeugung der optischen Daten-Trägerfrequenzsignale und zur Erzeugung des Lokaloszillatorsignals wenigstens teilweise auf.

Im Basisbandteil des optischen Heterodynempfängers befindet sich üblicherweise eine Einrichtung zur Gewinnung eines den Beginn und das Ende jedes Sendesymbols zeitlich markierenden Taktsignals und ein Entscheider.

Durch das genannte Filter und den Begrenzerverstärker bzw. durch die PLL gelangen diejenigen Phasenstörungen, die sich innerhalb der Durchlaßbandbreite des Filters bzw. der Schleifenbandbreite der PLL bewegen. Der Phasenjitter des rückgewonnenen Trägerfrequenzsignals verschlechtert die Übertragungseigenschaften des PSK-Heterodynempfängers. Aus diesem Grunde ist man beispielsweise auf relativ einfache Bitmuster, beispielsweise auf $2^7$-1 Pseudozufallsfolgen beschränkt. Alternativ könnte man die Bandbreite des Filters bzw. die Schleifenbandbreite der PLL sehr klein machen.

Dies führt jedoch dazu, daß das Phasenrauschen der Trägerfrequenz des rückgewonnenen Trägerfrequenzsignals nicht mehr oder nur in geringerem Maß als im modulierten Trägerfrequenzsignal enthalten ist. Als Folge heben sich das Phasenrauschen des rückgewonnenen Trägerfrequenzsignals und des modulierten Trägerfrequenzsignals nicht mehr gegenseitig auf, was entweder zu Symbolfehlern in Form einer error rate floor oder zu unrealistisch hohen Anforderungen an die Linienbreite der üblicherweise in Form von Halbleiterlasern ausgebildeten optischen Sender führt.

Es sei darauf hingewiesen, daß bei PSK-Systemen im Bereich der Radiofrequenzen die vorstehend dargelegten Probleme in der Regel nicht auftreten. Dies liegt darin, daß im Radiofrequenzbereich zur Phasenmodulation das Trägerfrequenzsignal entsprechend dem Bitmuster mit 1 oder mit -1 multipliziert wird. Die Phasenmodulation wird hier durch reine Amplitudenmodulation bewerkstelligt. Der Quadraturanteil des Signals ist immer gleich null. Auch nach einem Quadrieren des das modulierte Trägerfrequenzsignal bildenden Zwischenfrequenzsignals in einem Quadrierer tritt reine Amplitudenmodulation auf, welche durch das dem Quadrierer nachgeschaltete Filter und den Begrenzerverstärker vollständig eliminiert wird. Deshalb gibt es keinen bitmusterabhängigen Phasenjitter bei Richtfunkstrecken usw.. Auch im optischen Bereich läßt sich Phasenmodulation durch reine Amplitudenmodulation erzielen, beispielsweise durch ein Mach-Zehnder-Interferometer als Phasenmodulator (siehe J. Lightwave Technology, Vol. 8, 1990, No. 3, S. 309-322). Zur Vermeidung zusätzlicher unerwünschter Phasenmodulation muß das Interferometer jedoch eine spezielle Ansteuerung aufweisen, was technisch unerwünscht ist.

Der im Anspruch 1 angegebenen Erfindung liegt die Aufgabe zugrunde, einen Empfänger der eingangs genannten Art bereitzustellen, bei dem ein Jitter oder eine sonstige sendesymbolfolgenabhängige, z.B bitmusterabhängige Störung des Parameters, insbesondere ein Phasenjitter, im rückgewonnenen Trägerfrequenzsignal zwischen aufeinanderfolgenden Sendesymolen auf sowohl betriebsmäßig als auch konstruktiv einfache Weise vermieden ist.

Eine bevorzugte Ausgestaltung des erfindungsgemäßen Empfängers geht aus Anspruch 2 hervor.

Die Erfindung ist besonders für optische Empfänger geeignet, denen die Daten-Trägerfrequenzsignale in Form von optischen Signalen zugeführt sind. Sie ist aber ebensogut für Radiofrequenzen geeignet. Wie jedoch erwähnt, werden im Radiofrequenzbereich in der Regel Multiplizierer als Phasenmodulatoren verwendet. Außerdem sind die Trägerlinienbreiten im Radiofrequenzbereich viel geringer als im optischen Bereich, so daß die Bandbreite des dem Quadrierer nachgeschalteten Filters bzw. die Schleifenbandbreite der PLL enger gewählt werden können und der bei phasenmodulierten Datensignalen auftretende Phasenjitter auf diese Weise viel besser ausgefiltert werden kann. Deshalb liegt die Hauptanwendungsmöglichkeit der Erfindung im optischen Frequenzbereich. Eine bevorzugte Ausgestaltung eines derartigen optischen Empfängers ist im Anspruch 3, speziell im Anspruch 4 angegeben.

Die Erfindung läßt sich nicht nur für alle Arten von binärem PSK, sei es unipolar oder bipolar (siehe Anspruch 2), einsetzen. Sie ist genauso gut für vielstufiges PSK und kombinierte Phasen- und Amplituden- und/oder Polarisationsmodulation geeignet. Für m-stufiges PSK mit m > 2 ist anstelle eines Quadrierers eine Einrichtung mit einer Nichtlinearität m-ter Ordnung einzusetzen, so daß die Zwischenfrequenz des Zwischenfrequenzsignals mit der Zahl m vervielfacht wird. Außerdem ist eine Einrichtung zum Teilen der Frequenz des Signals mit der mit m vervielfachten Frequenz durch diese Zahl m einzusetzen.

Eine bevorzugte und vorteilhafte Einrichtung zur Unterdrukkung der Amplitude des zur Herstellung des rückgewonnenen Trägerfrequenzsignals verwendeten Signals während der zeitlichen Abstände zwischen benachbarten Sendesymbolen ist im Anspruch 5 angegeben. Bevorzugte und vorteilhafte Ausgestaltungen des Empfängers nach Anspruch 5 sind in den Ansprüchen 6 bis 9 angegeben.

Weitere bevorzugte und vorteilhafte Ausgestaltungen des erfindungsgemäßen Empfängers gehen aus den Ansprüchen 10 bis 16 hervor.

Ein besonderer Vorteil der Erfindung liegt darin, daß optische PSK-Heterodynsysteme realisiert werden, in denen anspruchsvolle Bitmuster, wie z.B. eine $2^{15}$-1 Pseudozufallsfolge übertragen und empfangen werden können, ohne daß Laser extrem schmaler Linienbreite, die beispielsweise mit externen Resonatoren zu realisieren sind, übertragen und empfangen werden können. Die Erfindung ist auch für Basisbandsysteme einsetzbar, deren Empfänger einen In-Phase-Zweig und einen Quadratur-Zweig aufweisen (siehe beispielsweise F. Der, Electronics Lett., Vol. 27, 1991, No. 23, S. 2177-2179. Allerdings bedeutet es einen erhöhten Aufwand In-Phase-Zweig und Quadratur-Zweig zu realisieren.

Der Erfindung wird in der nachfolgenden Beschreibung anhand der Figuren beispielhaft näher erläutert. Es zeigen:

Figur 1
in schematischer Darstellung ein auf einem herkömmlichen Heterodynempfänger basierendes Ausführungsbeispiel der Erfindung,

Figur 2a bis 2g
in Diagrammen über der Zeit t verschiedene beispielhafte Wellenformen, wie sie bei der Erfindung oder bei herkömmlichen Einrichtungen auftreten, zum Vergleich miteinander,

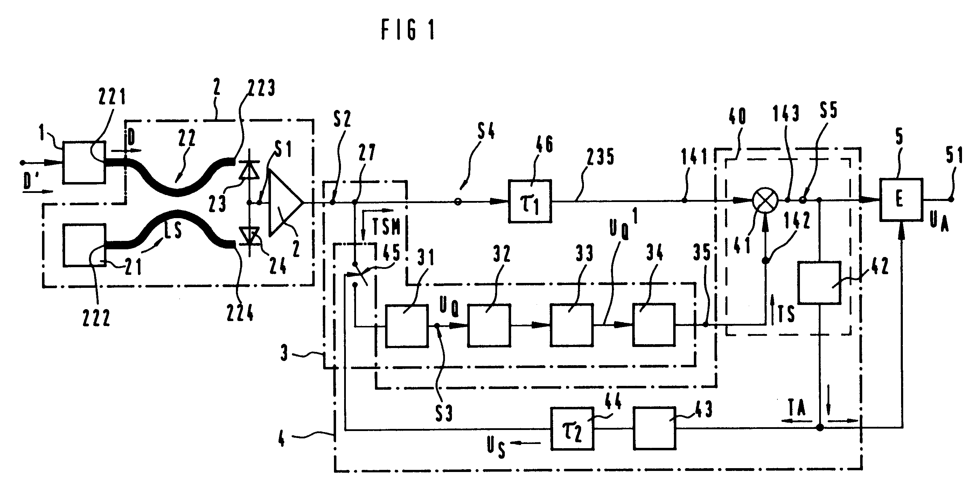

Figur 3
in schematischer Darstellung ein Ausführungsbeispiel eines beim Beispiel nach Figur 1 verwendeten Filters, und

Figuren 4a und 4b
eine Kodiereinrichtung zur Erzeugung von eine kodierte Information der in den aufeinanderfolgenden Bits der Datensignale enthaltenen Differenzen zwischen den Parameterwerten des Parameters enthaltenden Datensignalen bzw. eine Dekodiereinrichtung zur Dekodierung der im Zwischenfrequenzsignal enthaltenen kodierten Information über die Differenzen der Parameterwerte.

In Figur 1 ist beispielsweise ein herkömmlicher optischer Heterodynempfänger für PSK-modulierte optische Datensignale D dargestellt, auf den die Erfindung angewandt ist. Ein durch elektrische Datensignale D' steuerbarer Sender sendet ein moduliertes optisches Daten-Trägerfrequenzsignal D aus, dem PSK-Modulation der elektrischen Datensignale D' aufgeprägt wird. Das PSK-modulierte optische Daten-Trägerfrequenzsignal D ist dem optischen Empfänger zugeleitet. In der Figur 1 ist der Sender 1 der Einfachheit halber nahe beim Empfänger angeordnet. Üblicherweise ist aber der Sender 1 weit vom optischen Empfänger entfernt und durch eine lange optische Übertragungsstrecke mit dem optischen Empfänger verbunden.

Der optische Heterodynempfänger nach Figur 1 weist als Eingangsstufe eine Einrichtung 2 zur Erzeugung eines modulierten Trägerfrequenzsignals TSM aus dem PSK-modulierten optischen Daten-Trägerfrequenzsignal D durch Überlagerung mit einem Lokaloszillatorsignal LS fester Frequenz auf. Zur Überlagerung des optischen Daten-Trägerfrequenzsignals D mit dem Lokaloszillatorsignal LS weist die Einrichtung 2 einen optischen Koppler 22 mit zwei Eingangstoren 221 und 222 und zwei Ausgangstoren 223 und 224 auf. Der optische Koppler 22 kann beispielsweise ein optischer Richtkoppler, beispielsweise ein Faserrichtkoppler oder ein integriertoptischer Richtkoppler, sein,
Die optischen Datensignale werden beispielsweise über das eingangsseitige Tor 221 in den Koppler 22 eingekoppelt. Das von einem Lokaloszillator 21 der Einrichtung 2 erzeugte Lokaloszillatorsignal LS wird durch das andere eingangsseitige Tor 222 in den Koppler 22 eingekoppelt. Beide Signale D und LS werden im Koppler 22 einander überlagert und zu einem Teil dem ausgangsseitigen Tor 223, zum anderen Teil dem ausgangsseitigen Tor 224 des Kopplers 22 zugeführt, wo die einander überlagerten Signale, die das modulierte Trägerfrequenzsignal TSM enthalten, ausgekoppelt und jeweils einem Photodetektor 23 bzw. 24 zur optoelektrischen Wandlung zugeführt werden. Prinzipiell genügt ein optoelektrischer Detektor, entweder der Detektor 23 oder der Detektor 24.

Beim Beispiel nach Figur 1 ist für jedes ausgangsseitige Tor 223 und 224 je ein Detektor 23 bzw. 24 vorgesehen.

An einem Abgriffpunkt 25 zwischen den beiden Detektoren 23 und 24 wird das elektrische modulierte Trägerfrequenzsignal TSM abgegriffen und einem Verstärker 26 zur elektrischen Verstärkung zugeführt.

Der vom Abgriffpunkt 25 ausgehende Signalpfad für das elektrische modulierte Trägerfrequenzsignal TSM teilt sich an einem Verzweigungspunkt 27 in zwei Zweig-Signalpfade 234 und 235 auf. Der Signalpfad 235 führt über ein Verzögerungsglied 46 zu einem ersten Eingang eines Multiplizierers 41. Der andere Signalpfad 234 führt durch eine Einrichtung 3 zur Rückgewinnung des Trägerfrequenzsignals TS aus dem elektrischen modulierten Trägerfrequenzsignal TSM zu einem zweiten Eingang des Multiplizierers 41, in welchem das zugeführte modulierte Trägerfrequenzsignal TSM und das rückgewonnene elektrische Trägerfrequenzsignal TS zur Demodulation des PSK-modulierten Trägerfrequenzsignals TSM miteinander multipliziert werden. Die Verzögerungszeit $\tau_1$ des Verzögerungsgliedes 46 ist so zu wählen, daß die Signallaufzeiten in beiden Signalpfaden 234 und 235 einander näherungsweise gleich sind und im Multiplizierer 41 eine Phasenanpassung beider Signale gewährleistet ist.

Das an einem Ausgang 143 des Multiplizierers 41 zur Verfügung stehende demodulierte Trägerfrequenzsignal TSM wird einem Entscheider 5 zugeleitet, der von einem Taktsignal TA getaktet wird, das aus dem demodulierten Trägerfrequenzsignal TSM durch eine Taktrückgewinnungsschaltung 42 gewonnen wird. Das Ausgangssignal $U_A$ des Heterodynempfängers nach Figur 1 steht an einem Ausgang 51 des Entscheiders 5 zur Verfügung. Die Einrichtung 3 zur Rückgewinnung des Trägerfrequenzsignals TS aus dem elektrischen modulierten Trägerfrequenzsignal TSM weist einen im Signalpfad 234 angeordneten Quadrierer 31 auf, der die Zwischenfrequenz des zugeleiteten modulierten Trägerfrequenzsignals TSM verdoppelt. Es sei angenommen, daß der Quadrierer 31 ein Quadrierer ist, dessen Gleichanteil nicht abgetrennt ist. Die Erfindung funktioniert auch für andere andere Arten der Frequenzverdoppelung und unabhängig davon, ob der eventuell entstehende Gleichanteil abgetrennt wird oder nicht.

Das frequenzverdoppelte Trägerfrequenzsignal UQ aus dem Quadrierer 31 wird einem Filter 32 zur Verbesserung des Signal-Rausch-Verhältnisses zugeführt. Das Ausgangssignal des Filters 32 wird gegebenenfalls einem Begrenzerverstärker 33 zugeführt, dessen Ausgangssignal UQ1 einem Frequenzteiler 34 zugeleitet ist, der die verdoppelte Frequenz durch zwei teilt. Das an einem Ausgang 35 des Frequenzteilers 34 zur Verfügung stehende Ausgangssignal hat die ursprüngliche Zwischenfrequenz des modulierten Trägerfrequenzsignals TSM und bildet das rückgewonnene Trägerfrequenzsignal TS.

Anstelle des Filters 32 und des Begrenzerverstärkers 33 kann auch eine PLL eingesetzt werden, was an der der Erfindung zugrundeliegenden Problematik nichts prinzipielles ändert.

Der bisher beschriebene optische Heterodynempfänger ist allgemein bekannt.

Die eigenständig erkannte und der Erfindung zugrundeliegende Problematik sei anhand der Figuren 2a bis 2g näher erläutert, wobei der Einfachheit halber und ohne Beschränkung der Allgemeinheit ein PSK-moduliertes Trägerfrequenzsignal TSM der Bitfolge $B_2^1$ $B_1^2$ $B_2^3$ $B_2^4$ ... mit $B_1 =$ "1", $B_2 =$ "0", angenommen sei. In jedem Bit $B_2^1$ $B_1^2$ $B_2^3$ $B_2^4$ ... dieser Folge, von denen jedes eine Dauer $\Delta t_1$ hat, ist die Frequenz des modulierten Trägerfrequenzsignals TSM konstant. Die Binärwerte "1" und "0" unterscheiden sich durch voneinander verschiedene Phasenwerte Ph1 und Ph2 der Phase Ph des modulierten Trägerfrequenzsignals TSM. Ordnet man beispielsweise dem Binärwert "1" den Phasenwert Ph1 und dem Binärwert "0" den Phasenwert Ph2 zu, so haben in der obigen Bitfolge $B_2^1$ $B_1^2$ $B_2^3$ $B_2^4$ ... die Bits $B_2^1$, $B_2^3$ und $B_2^4$ mit dem Binärwert "1" bezüglichen des zeitlichen Beginns jedes dieser Bits den gleichen Phasenwert Ph1, während das Bit $B_1^2$ mit dem Binärwert "0" bezüglich des zeitlichen Beginns dieses Bits $B_1^2$ den Phasenwert Ph2 aufweist, der sich beispielsweise um $\pi$ vom Phasenwert Ph1 unterscheidet.

Sämtliche Bits dieser Bitfolge $B_2^1$ $B_1^2$ $B_2^3$ $B_2^4$ ... sind durch einen zeitlichen Abstand $\Delta t_0$ voneinander getrennt, der zweckmäßigerweise so bestimmt ist, daß zwischen benachbarten Bits mit gleichem Binärwert, beispielsweise den Bits $B_2^3$ und $B_2^4$ mit dem Binärwert "1", keine Frequenzänderung beim Übergang vom Wellenzug des einen Bits zum Wellenzug des nächsten Bits vorgenommen werden muß, um am Beginn dieses nächsten Bits den richtigen Phasenwert zu erhalten.

Beim Übergang vom ersten Bit $B_2^1$ mit dem Binärwert "1" zum nächsten Bit $B_1^2$ mit dem Binärwert "0" ist dagegen in dem zwischen diesen Bits $B_2^1$ und $B_1^2$ liegenden zeitlichen Abstand $\Delta t_0$ kurzzeitig eine Frequenzerhöhung vorzunehmen, damit am zeitlichen Beginn des Bits $B_1^2$ der Phasenwert Ph2 erhalten wird, der dem Binärwert "0" entspricht. Beim Übergang vom zweiten Bit $B_1^2$ mit dem Binärwert "0" zum nächsten Bit $B_2^3$ mit dem Binärwert "1" ist in dem zwischen diesen Bits $B_1^2$ und $B_2^3$ liegenden zeitlichen Abstand $\Delta t_0$ eine beispielsweise kurzzeitige Frequenzerniedrigung (oder Frequenzerhöhung bei unipolarer PSK) vorzunehmen, damit am zeitlichen Beginn des Bits $B_2^3$ der Phasenwert Ph1 erhalten wird, der dem geforderten Binärwert "1" entspricht.

Demnach sind beim Übergang vom Bit $B_2^1$ zum Bit $B_1^2$ und beim Übergang vom Bit $B_1^2$ zum Bit $B_2^3$ während des zwischen diesen Bits $B_2^1$ und $B_1^2$ bzw. $B_1^2$ und $B_2^3$ liegenden zeitlichen Abstandes $\Delta t_0$ kurzzeitig auftretende Frequenzen verschieden von der Frequenz während der Dauer $\Delta t_1$ der Bits $B_2^1$ bis $B_2^4$ und des zeitlichen Abstandes $\Delta t_0$ zwischen den Bits $B_2^3$ und $B_2^4$. Der zeitliche Verlauf des so beschaffenen modulierten Trägerfrequenzsignals TSM ist in Figur 2a dargestellt.

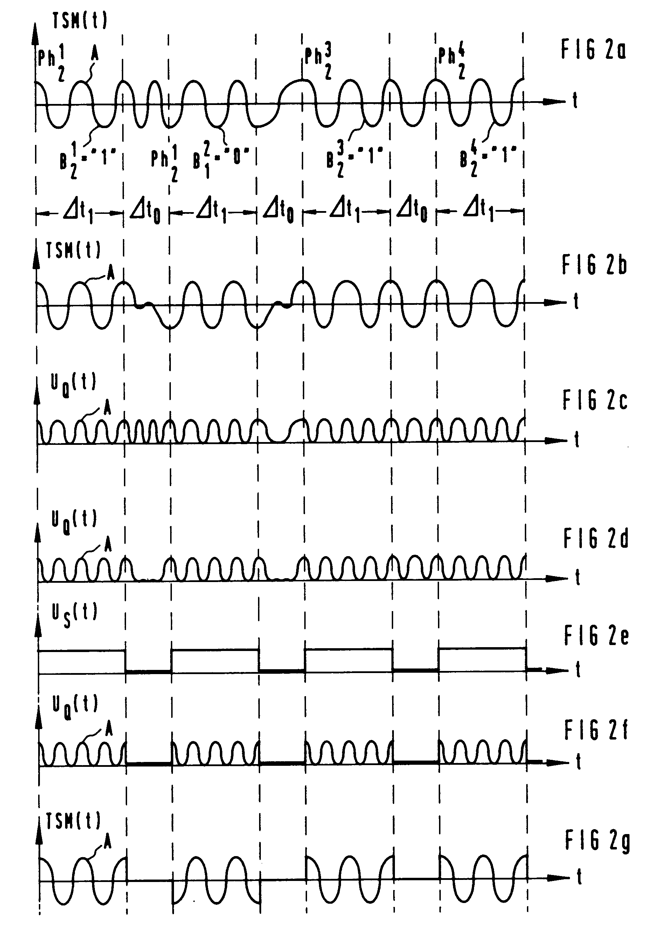

Das gleiche gilt für das gegenüber dem modulierten Trägerfrequenzsignal TSM frequenzverdoppelte Trägerfrequenzsignal $U_Q$ des Quadrierers 31, das, beispielsweise am Punkt S3 abgegriffen, in Figur 2c dargestellt ist. Diese kurzzeitige Frequenzverschiedenheit im frequenzverdoppelten Trägerfrequenzsignal $U_Q$ führt zu einem Phasenjitter, der in abgeschwächter Form auch noch nach dem zur Verbesserung des Signal-Rausch-Verhältnisses eingesetzten Filter 32 und nach dem gegebenenfalls eingesetzten Begrenzerverstärker 33 auftritt. Ähnliches würde auch gelten, wenn anstelle des Filters 32 und des Begrenzerverstärkers 33 eine PLL eingesetzt wäre.

Sowohl beim Signal nach Figur 2a als auch beim Signal nach Figur 2c bleibt die Amplitude A des Signals unabhängig von der Frequenz oder Phase konstant.

Anders ist dies, wenn im Radiofrequenzbereich zur Phasenmodulation das Daten-Trägerfrequenzsignal und somit auch das modulierte Trägerfrequenzsignal TSM mit 1 oder -1 multipliziert wird. In der Figur 2b ist die Bitfolge $B_2^1$ $B_1^2$ $B_2^3$ $B_2^4$ ... mit $B_1$ = "1", $B_2$ = "0" für diesen Fall dargestellt. Im zeitlichen Abstand $\Delta t_0$ zwischen den Bits $B_2^1$ und $B_1^2$ sowie im zeitlichen Abstand $\Delta t_0$ zwischen den Bits $B_1^2$ und $B_2^3$ ist wegen des Übergangs vom Binärwert "1" zum Binärwert "0" bzw. vom Binärwert "0" zum Binärwert "1" aufgrund der jeweils dafür erforderlichen Multiplikation mit -1 die Amplitude A sehr klein. Nach dem Quadrieren des Signals nach Figur 2b wird das frequenzverdoppelte Signal nach Figur 2d erhalten, bei dem in den zeitlichen Abständen $\Delta t_0$ zwischen den Bits $B_2^1$ und $B_1^2$ bzw. $B_1^2$ und $B_2^3$ die Amplitude A klein ist. Die Amplitudenänderung wird durch das Filter zur Verbesserung des Signal-Rausch-Verhältnisses und gegebenenfalls den Begrenzerverstärker eliminiert, so daß kein bitmusterabhängiger Phasenjitter in diesen zeitlichen Abständen $\Delta t_0$ auftritt. Von Bedeutung für die Abwesenheit von Phasenjitter ist, daß weder das Signal nach Figur 2b noch das Signal nach Figur 2d Quadraturanteile aufweisen, sondern lediglich in In-Phase-Anteile.

Erfindungsgemäß ist zur Elimination eines bitmusterabhängigen Phasenjitters im Fall der Signale nach den Figuren 2a und 2c eine Einrichtung 4 zur Unterdrückung der Amplitude A des zur Herstellung des rückgewonnenen Trägerfrequenzsignals TS am Ausgang 35 der Einrichtung 3 verwendeten Signals während des zeitlichen Abstandes $\Delta t_0$ zwischen aufeinanderfolgenden Bits $B_2^1$ und $B_1^2$, $B_1^2$ und $B_2^3$, $B_2^3$ und $B_2^4$ usw. der Daten-Trägerfrequenzsignale D vorgesehen.

Beim Beispiel nach Figur 1 arbeitet die Einrichtung 4 so, daß sie die Amplitude A des modulierten Trägerfrequenzsignals TSM unterdrückt. Die Unterdrückung der Amplitude A erfolgt automatisch durch die Multiplikation dieses Signals $U_{ZF}$ mit dem rückgewonnenen Taktsignal TA.

Die Einrichtung 4 weist eine Einrichtung 42 zur Gewinnung des den Beginn und das Ende jedes Bits $B_2^1$ $B_1^2$ $B_2^3$ $B_2^4$, ... der Daten-Trägerfrequenzsignale D zeitlich markierenden Taktsignals TA und eine in dem Signalpfad 234 angeordnete und in Abhängigkeit von dem Taktsignal TA derart steuerbare Amplitudenunterdrückungseinrichtung 45 auf, daß diese Amplitudenunterdrückungseinrichtung 45 während der Dauer $\Delta t_1$ jedes Bits $B_2^1$, $B_1^2$, $B_2^3$, $B_2^4$, ... das auf diesem Signalpfad 234 geführte Signal ungehindert hindurchläßt und während des zeitlichen Abstandes $\Delta t_0$ zwischen aufeinanderfolgenden Bits $B_2^1$ und $B_1^2$, $B_1^2$ und $B_2^3$, $B_2^3$ und $B_2^4$, ... die Amplitude A dieses Signals unterdrückt.

Der Multiplizierer 41 und die Taktrückgewinnungsschaltung 42 sind bekannt.

Die Amplitudenunterdrückungseinrichtung 45 ist beispielsweise in dem Signalpfad 234 angeordnet, der von dem Abzweigpunkt 27 durch die Einrichtung 3 zur Rückgewinnung des Trägerfrequenzsignals TS aus dem modulierten Trägerfrequenzsignal zum Multiplizierer 41 führt.

Die Amplitudenunterdrückungseinrichtung 45 könnte auch an den Stellen $S_1$, $S_2$ oder $S_3$ des vom Abgriffpunkt 25 zum Verzweigungspunkt 27 führenden Signalpfades bzw. des Signalpfades 234 angeordnet sein. In dem Fall, daß die Amplitudenunterdrückungseinrichtung 45 an den Stellen $S_1$ oder $S_2$ angeordnet ist, hat das Signal $U_Q$ an der Stelle $S_3$ am Ausgang des Quadrierers 31 in Abhängigkeit von der Steuerung durch das Taktsignal TA die Form nach Figur 2f, und das dem Eingang 141 des Multiplizierers 41 zugeführte modulierte Trägerfrequenzsignal TSM hat die in Figur 2g gezeigte Form. Ist die Amplitudenunterdrückungseinrichtung 45 zwischen dem Abzweigpunkt 27 und dem Quadrierer 31 angeordnet, so wie in Figur 1 dargestellt, wird das im Multiplizierer 41 auf dem Signalpfad 235 zugeführte modulierte Trägerfrequenzsignal TSM nicht beeinträchtigt und hat die Form nach Figur 2a, während im Pfad 234 am Eingang des Quadrierers 31 ein Signal nach Figur 2g anliegt. Das Ausgangssignal $U_Q$ des Quadrierers 31 hat dagegen die in Figur 2f gezeigte Form, d.h. die Amplitude A dieses Signals ist in den zeitlichen Abständen $\Delta t_0$ zwischen den Bits unterdrückt.

Die Anordnung der Amplitudenunterdrückungseinrichtung 45 in den Positionen $S_1$ und $S_2$ ist weniger vorteilhaft, weil so nicht nur dem Signalpfad 234, sondern auch dem Signalpfad 235 Energie entzogen wird und außerdem Stabilitätsprobleme bei der Taktrückgewinnung auftreten können.

Falls der Empfänger nach Figur 1 neben der natürlichen Bandbreitebegrenzung durch Verstärker, Photodioden usw. noch ein Zwischenfrequenzfilter aufweist, so sollte dieses Zwischenfrequenzfilter nach Möglichkeit im Signalpfad nicht vor der Amplitudenunterdrückungseinrichtung angeordnet sein, weil sonst durch die Amplitudenunterdrückungseinrichtung ein breiterer Bereich aus jedem Bit herausgeschnitten werden müßte. In einem wichtigen Spezialfall ist die Amplitudenunterdrückungseinrichtung 45 so wie in Figur 1 oder an der Stelle $S_3$ angeordnet, während das Zwischenfre-

quenzfilter, falls vorhanden, an der Stelle $S_4$ anzuordnen ist.

Es können ein oder mehrere Filter für das modulierte Trägerfrequenzsignal TSM oder das durch die Amplitudenunterndrückungseinrichtung 45 hindurchgegangene Trägerfrequenzsignal TSM vorgesehen sein, das oder die ein Signal-Rausch-Verhältnis dieses Signals verbessern. Beispielsweise kann im Fall der Figur 1 ein solches Filter zwischen dem Abzweigpunkt 27 und der Amplitudenunterdrückungseinrichtung 45 und/oder zwischen dieser Einrichtung 45 und der Frequenzvervielfachungseinrichtung 31 vorgesehen sein. Ist die Amplitudenunterdrückungseinrichtung 45 an der Stelle $S_2$ angeordnet, so kann ein solches Filter zwischen dem Verstärker 2 und der Amplitudenunterdrückungseinrichtung und/oder dieser Einrichtung und dem Abzweigpunkt 27 angeordnet sind. Auch kann ein solches Filter zwischen dem Abzweigpunkt 27 und der Verzögerungseinrichtung 46 und/oder zwischen dieser Einrichtung 46 und dem Eingang 141 des Multiplizierers 41 angeordnet sein.

Die Anzahl m der möglichen Sendesymbole kann erhöht werden, wenn nicht nur ein sondern zwei oder mehrere zyklische Parameter, beispielsweise die Phase und die Amplitude verwendet werden. Die Anzahl der möglichen Sendesymbole erhöht sich in diesem Fall auf das Produkt aus der Anzahl der für den einen zyklischen Parameter verwendeten Sendesymbole und der Anzahl der für den anderen Parameter verwendeten Sendesymbole. In diesem Fall ist die Stufigkeit der Kodiereinrichtung 6 und der Dekodiereinrichtung 7 nicht nur die Anzahl der für einen Parameter verwendeten Sendesymbole sondern durch ein Vielfaches davon bestimmt.

Die Amplitudenunterdrückungseinrichtung 45 ist in jedem Fall vorzugsweise ein in Abhängigkeit von dem Taktsignal TA derart steuerbarer Schalter, daß dieser Schalter während der Dauer $\Delta t_1$ jedes Bits $B_2{}^1$, $B_1{}^2$, $B_2{}^3$, $B_2{}^4$, ... den Signalpfad, in dem der Schalter angeordnet ist, im Fall der Figur 1 der Signalpfad 234, schließt und während des zeitlichen Abstandes $\Delta t_0$ zwischen aufeinanderfolgenden Bits $B_2{}^1$ und $B_1{}^2$, $B_1{}^2$ und $B_2{}^3$, $B_2{}^3$ und $B_2{}^4$, ... diesen Signalpfad unterbricht. Der Schalter kann beispielsweise durch Dioden, Transistoren oder dergleichen realisiert werden. Statt eines Schalters kann auch ein Multiplizierer oder ein schnell regelbarer Verstärker verwendet werden.

Das aus dem Taktsignal TA abgeleitete Schaltsignal $U_S$ zur Steuerung der Amplitudenunterdrückungseinrichtung bzw. des Schalters 45 ist vorzugsweise ein rechteckförmiges Signal, so wie es in der Figur 2e dargestellt ist.

Die Einrichtung 4 weist ein Verzögerungsglied 44 zum Verzögern des Schaltsignals $U_S$ um eine Verzögerungszeit $\tau_2$ derart auf, daß die Signalamplituden des Schaltsignals $U_S$, bei denen die Amplitudenunterdrückungseinrichtung 45 die Amplitude A des betreffenden Signals unterdrückt, genau mit den zeitlichen Abständen $\Delta t_0$ zwischen den Bits der Daten-Trägerfrequenzsignale D zusammenfallen.

Durch die begrenzte Bandbreite des Empfängers werden in der Praxis die in die zeitlichen Abstände $\Delta t_0$ fallenden Phasenübergänge des Signals nach Figur 2a auf größere Zeitabstände verschliffen. Statt des rechteckförmigen Schaltsignals nach Figur 2 können auch abgerundete Schaltsignale verwendet werden. Das ist insbesondere dann zweckmäßig, wenn das Signal im Empfänger bzw. gegebenenfalls im Zwischenfrequenzfilter bereits eine Bandbreitebegrenzung mit dem Verschleifen der in die zeitlichen Abstände $\Delta t_0$ fallenden Phasenübergänge erfahren hat. Ein abgerundetes oder ein rechteckförmiges Schaltsignal kann in Abhängigkeit von dem Taktsignal TA mit Hilfe eines Impulsformers 43, gewonnen werden, das vor oder hinter dem Verzögerungsglied 44 angeordnet werden kann.

Damit ein maximales Maß an Phasenrauschen von Datensignal D und Lokaloszillatorsignal LS störungsfrei verkraftet wird, sollte das Filter 32 im Durchlaßbereich einen flachen Gruppenlaufzeitverlauf aufweisen. Das kann beispielsweise dadurch erreicht werden, daß das Filter 32 als Besselfilter ausgeführt wird. Eine andere Alternative besteht darin, das Filter 32 als Transversalfilter auszuführen. Das Ausgangssignal y(t) des Transversalfilter wird durch eine Linearkombination von verschieden verzögerten Eingangssignalen x(t) in der Form

$$y(t) = \sum_i a_i \cdot x(t - \tau_i)$$

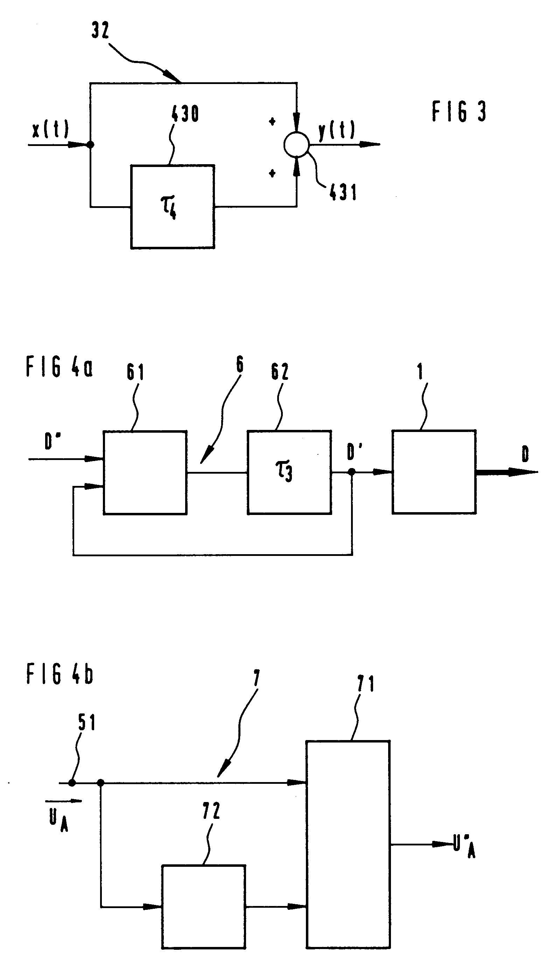

gebildet, wobei i eine ganze Zahl ist, $a_i$ der jeweilige Koeffizient und $\tau_i$ die jeweilige Verzögerungszeit bedeuten. Der Entwurf von Transversalfiltern ist beispielsweise in L.R. Rabiner, B. Gold: Theory and application of digital signal processing, Prenice Hall, Inc., Englewood Cliffs, New Jersey, 1975 beschrieben. Ein einfaches Transversalfilter ist in der Figur 3 dargestellt. Gegebenenfalls können mehrere dieser Filter, eventuell mit verschiedenen Verzögerungszeiten, zum Erreichen einer kleineren Bandbreite kaskadiert werden. In der Figur 3 ist ein Verzögerungsglied zum Verzögern um eine Verzögerungszeit $\tau_4$ mit 430 und ein Summierglied mit 431 bezeichnet.

Beim Einschalten des Empfängers ist der Zustand der Teilereinrichtung 34 undefiniert. Auch durch Rauschen, Störungen und nichtideales Verhalten der Teilereinrichtung 34 kann es vorkommen, daß die Teilereinrichtung z.B. einen Eingangsimpuls "verschluckt". Die Folge davon ist, daß die Polarität des Ausgangssignals des Mischers bzw. Multiplizierers 41 und somit auch des Ausgangssignals $U_A$ am Ausgang 51 des Entscheiders wechselt. Bei m-stufigem PSK kann es analog zu zyklischer Vertauschung der Symbole kommen. Zur Beseitigung dieser Schwierigkeit besteht die Möglichkeit der Phasendifferenzkodierung. Diese ist aus E. Herter, W. Röcker: Nachrichtentechnik: Übertragung und Verarbeitung, Carl Hanser Verlag, München Wien, 1976, Kapitel 2.4.3.2 und 2.5.4 für den Radiofrequenzbereich bekannt. Die Information wird durch Kodierung in der Differenz der Phasenlagen aufeinanderfolgender Schritte ausgedrückt. Im Empfänger wird auch nur die Differenz zwischen aufeinanderfolgenden Bits ausgewertet.

Eine für diese Zwecke geeignete Kodiereinrichtung 6, die dem Sender 1 vorzuschalten ist, ist in der Figur 4a dargestellt und mit 5 bezeichnet. Diese Kodiereinrichtung erzeugt aus Eingangsdatensignalen D'' Datensignale D', die eine kodierte Information über die in den aufeinanderfolgenden Bits $B_2{}^1$, $B_1{}^2$, $B_2{}^3$, $B_2{}^4$, ... der Datensignale enthaltenen Differenzen zwischen den Phasenwerten Ph1 und Ph2 der Phase Ph enthalten. Gemäß Figur 4a wird das Eingangsdatensignal D'' durch einen Modulo-m-Addierer 61, bei dem ein eventueller Übertrag ungenutzt bleibt, und ein durch eine Laufzeitleitung oder einen mit dem Bittakt getakteten Speicher realisiertes Verzögerungsglied 62 mit einer Verzögerungszeit $\tau_3$, die das Signal um die Dauer $\Delta t_1$ eines Bits verzögert, in ein differenzkodiertes Datensignal D' umgeformt, das dem Sender 1 zur Steuerung zugeleitet ist. Im Falle binärer Phasenumtastung reduziert sich der erforderliche Modulo-2-Addierer 61 zu einem einfachen exklusiven ODER-Gatter.

Die in der Figur 4b gezeigte Dekodiereinrichtung 7 ist an den Ausgang 51 des Heterodynempfängers nach Figur 1 anzuschließen. In dieser Dekodiereinrichtung 7 wird jedes im Ausgangssignal $U_A$ des Entscheiders 5 des Empfängers nach Figur 1 enthaltene differenzkodierte Bit von dem in einem Verzögerungsglied 72 mit der Verzögerungszeit $\tau_3$ um die Dauer $\Delta t_1$ eines Bits verzögerten Bit in einem Modulo-m-Subtrahierer 71 modulo-m-subtrahiert. Im Fall binärer PSK ist auch der Subtrahierer 71 einfach durch ein exklusives ODER-Gatter zu realisieren. Das Ausgangssignal $U_A''$ des Dekodierers 71 ist das dekodierte Ausgangssignal des Empfängers nach Figur 1. Im Idealfall ist D'' = $U_A''$, obwohl die Beziehung D = $U_A$ mit einer Modulo-m-Unsicherheit behaftet ist.

Falls der Sender 1 einen Phasenmodulator enthält, kann er direkt mit den Daten-Trägerfrequenzsignalen angesteuert werden. Falls der Sender 1 einen direkt in der Frequenz modulierten Laser enthält, muß, da die Phase das Integral der Frequenz ist, im Sender 1 außerdem eine Einrichtung vorgesehen sein, die für jeden Phasensprung einen Stromimpuls erzeugt, dessen Fläche proportional zum gewünschten Phasensprung ist. Diese Einrichtung kann beispielsweise ein Differenzierer sein.

**Patentansprüche**

1.  Empfänger für modulierte Trägerfrequenzsignale (TSM), die durch digitale Modulation eines Trägerfrequenzsignals bezüglich zumindest eines, insbesondere zyklischen Parameters (Ph) dieses Trägerfrequenzsignals, insbesondere dessen Phase und/oder Amplitude, erzeugt sind,

    - wobei die modulierten Trägerfrequenzsignale eine Folge von Sendesymbolen ($B_i{}^j$, i $\epsilon$ {1, 2, ... m}, j = 1, 2, 3 ...) bilden, die aus einer vorbestimmten Anzahl (m) von zwei oder mehreren vorbestimmten unterschiedlichen, durch unterschiedliche Parameterwerte ($Ph_1$, $Ph_2$, ... $Ph_m$, m $\geq$ 2) des Parameters (Ph) repräsentierten Sendesymbolen ($B_1$, $B_2$, ... $B_m$) beliebig ausgewählt und durch einen bestimmten zeitlichen Abstand ($\Delta t_0$) voneinander getrennt sind,

    - wobei in der Folge ein Übergang vom Parameterwert ($ph_i{}^j$) eines Sendesymbols ($B_i{}^j$, j = 1, 2, 3 ...) auf den Parameterwert ($ph_i{}^{j+1}$) des nächsten Sendesymbols ($B_i{}^{j+1}$) in dem bestimmten zeitlichen Abstand ($\Delta t_0$) zwischen diesen Sendesymbolen ($B_i{}^j$, $B_i{}^{j+1}$) stattfindet,

    mit

    - einer Einrichtung (3) zur Rückgewinnung des Trägerfrequenzsignals (TS) aus dem modulierten Trägerfrequenzsignal (TSM), die

        - eine Frequenzvervielfachungseinrichtung (31) zur Vervielfachung der Frequenz des modulierten Trägerfrequenzsignals (TSM) um das m-fache, wobei m die Anzahl der vorbestimmten unterschiedlichen Sendesymbole ($B_1$, $B_2$, ... $B_m$) ist,

        - eine Einrichtung (32, 33) zur Erzeugung eines die gleiche Frequenz wie das mit m frequenzvervielfachte modulierte Trägerfrequenzsignal ($U_Q$) aber geringere Amplituden- und Phasenschwankungen als dieses frequenzvervielfachte modulierte Trägerfrequenzsignal ($U_Q$) aufweisenden Signals ($U_Q{}^1$) aus diesem frequenzvervielfachten Trägerfrequenzsignal ($U_Q$),

und

- eine Frequenzteilereinrichtung (34) zum Teilen der Frequenz des die geringeren Amplituden- und Phasenschwankungen aufweisenden Signals ($U_Q^1$)durch m

aufweist,
**gekennzeichnet durch**
eine Einrichtung (4) zur Unterdrückung der Amplitude (A) des zur Herstellung des rückgewonnenen, aus der Frequenzteilereinrichtung (34) stammenden Trägerfrequenzsignals (TS) verwendeten frequenzgeteilten Signals aus der Frequenzteilereinrichtung (34) während des zeitlichen Abstandes ($\Delta t_0$) zwischen aufeinanderfolgenden Sendesymbolen ($B_j^j$, $B_j^{j+1}$) der modulierten Trägerfrequenzsignale (TSM).

2. Empfänger nach Anspruch 1,
**dadurch gekennzeichnet**,
daß die modulierten Trägerfrequenzsignale (TSM) Signale mit binärer Phasenumtastung sind, daß die Frequenzvervielfachungseinrichtung (31) ein Element mit einer Übertragungscharakteristik entsprechend einer Nichtlinearität zweiter Ordnung ist, und daß die Frequenzteilereinrichtung (34) ein Frequenzteiler zum Teilen der Frequenz des die geringen Amplituden- und Phasenschwankungen aufweisenden Signals ($U_Q^1$) durch 2 ist.

3. Empfänger nach Anspruch 1 oder 2,
**dadurch gekennzeichnet**,
daß eine Einrichtung (2) zur Erzeugung eines das modulierte Trägerfrequenzsignal (TSM) bildenden Zwischenfrequenzsignals aus einem zugeführten modulierten Daten-Trägerfrequenzsignal (D) durch Überlagerung dieses zugeführten modulierten Daten-Trägerfrequenzsignals (D) mit einem Lokaloszillatorsignal (LS) fester Frequenz vorgesehen ist.

4. Empfänger nach Anspruch 3,
**dadurch gekennzeichnet**,
daß das zugeführte modulierte Daten-Trägerfrequenzsignal (D) ein optisches Signal ist und daß die Einrichtung (2) zur Erzeugung des das modulierte Trägerfrequenzsignal (TSM) bildenden Zwischenfrequenzsignals eine optoelektrische Einrichtung zur Überlagerung des zugeführten modulierten optischen Daten-Trägerfrequenzsignals (D) mit einem optischen Lokaloszillatorsignal (LS) fester Frequenz und Erzeugen des das Zwischenfrequenzsignal bildenden modulierten Trägerfrequenzsignals (TSM) in Form eines elektrischen Signals durch optoelektrische Wandlung des mit dem optischen Lokaloszillatorsignal (LS) überlagerten zugeführten modulierten optischen Daten-Trägerfrequenzsignals (D) aufweist.

5. Empfänger nach einem der vorhergehenden Ansprüche,
**dadurch gekennzeichnet**,
daß die Einrichtung (4) zur Unterdrückung der Amplitude (A) des zur Herstellung des rückgewonnenen Trägerfrequenzsignals (TS) verwendeten Signals eine Einrichtung (40) zur Gewinnung eines den Beginn und das Ende jedes Sendesymbols ($B_j^j$) zeitlich markierenden Taktsignals (TA) und eine in Abhängigkeit von dem Taktsignal (TA) derart steuerbare Amplitudenunterdrückungseinrichtung (45) aufweist, daß diese Amplitudenunterdrückungseinrichtung (45) während einer Dauer ($\Delta t_1$) jedes Sendesymbols ($B_i^j$) das modulierte Trägerfrequenzsignal (TSM), das frequenzvervielfachte modulierte Trägerfrequenzsignal ($U_Q$) und das geringere Amplituden- und Phasenschwankungen als das frequenzvervielfachte modulierte Trägerfrequenzsignal ($U_Q$) aufweisende Signal ($U_Q^1$) unbeeinflußt läßt und während des zeitlichen Abstandes ($\Delta t_0$) zwischen aufeinanderfolgenden Sendesymbolen ($B_i^j$, $B_i^{j+1}$) die Amplitude (A) des modulierten Trägerfrequenzsignals (TSM) oder des frequenzvervielfachten modulierten Trägerfrequenzsignals ($U_Q$) unterdrückt.

6. Einrichtung nach Anspruch 5,
**gekennzeichnet durch** eine Einrichtung (40) zur Gewinnung eines die Amplitudenunterdrückungseinrichtung (45) steuernden Schaltsignals (US) in Abhängigkeit von dem rechteckförmigen Taktsignal (TA).

7. Empfänger nach Anspruch 5 oder 6,
**dadurch gekennzeichnet**,
daß die Amplitudenunterdrückungseinrichtung (45) einen von dem Taktsignal (TA) derart steuerbaren Schalter aufweist, daß dieser Schalter während der Dauer ($Tt_1$) jedes Sendesymbols ($B_i^j$) geschlossen ist und die Zufuhr des modulierten Trägerfrequenzsignals (TSM) zur Frequenzvervielfachungseinrichtung (31) und des frequenzvervielfachten modulierten Trägerfrequenzsignal ($U_Q$) zur Einrichtung (32, 33) zur Erzeugung des geringere Amplituden- und Phasenschwankungen aufweisenden Signals ($U_Q^1$) ermöglicht, und während des zeitlichen Abstandes ($\Delta t_0$) zwischen aufeinanderfolgenden Sendesymbolen ($B_j^j$, $B_j^{j+1}$) offen ist unddie Zufuhr des modulierten Trägerfrequenzsignals (TSM) zur Frequenzvervielfachungseinrichtung (31) oder des frequenzvervielfachten modulierten Trägerfrequenzsignals ($U_Q$) zur Einrichtung (32, 33) zur Erzeugung des geringere Amplituden- und Phasenschwankungen aufweisenden Signals (U_Q$^1$) unterbricht.

8.  Empfänger nach einem der Ansprüche 5 bis 7,
    **dadurch gekennzeichnet,**
    daß das Taktsignal (TA) der Amplitudenunterdrückungseinrichung (45) durch einen Impulsformer (43) zugeführt ist.

9.  Empfänger nach einem der Ansprüche 1 bis 8,
    **gekennzeichnet durch**
    ein oder mehrere Filter für das modulierte Trägerfrequenzsignal (TSM) und/oder das durch die Amplitudenunterdrückungseinrichtung (45) hindurchgegangene Trägerfrequenzsignal (TSM) vorgesehen ist oder sind, das oder die ein Signal-Rausch-Verhältnis dieses Signals verbessern.

10. Empfänger nach einem der vorhergehenden Ansprüche,
    **dadurch gekennzeichnet,**
    daß die Einrichtung zur Erzeugung des geringere Amplituden- und Phasenschwankungen aufweisenden Signals (U_Q$^1$) ein Filter (32) für das frequenzvervielfachte modulierte Trägerfrequenzsignal (U_Q) zur Verbesserung des Signal-Rausch-Verhältnisses aufweist.

11. Empfänger nach Anspruch 10,
    **dadurch gekennzeichnet,**
    daß das Filter (32) eine oder mehrere Induktivitäten und/oder eine oder mehrere Kapazitäten aufweist.

12. Empfänger nach Anspruch 10 oder 11,
    **dadurch gekennzeichnet,**
    daß das Filter (32) einen oder mehrere Mikrowellenresonatoren aufweist.

13. Empfänger nach einem der Ansprüche 10 bis 12,
    **dadurch gekennzeichnet,**
    daß das Filter (32) ein Transversalfilter aufweist.

14. Empfänger nach einem der Ansprüche 10 bis 13,
    **dadurch gekennzeichnet,**
    daß die Einrichtung (32, 33) zur Erzeugung des geringere Amplituden- und Phasenschwankungen aufweisenden Signals (U_Q$^1$) einen zwischen dem Filter (32) und der Frequenzteilereinrichtung (34) angeordneten Begrenzerverstärker (33) aufweist.

15. Empfänger nach einem der vorhergehenden Ansprüche, insbesondere nach Anspruch 2,
    **gekennzeichnet durch** eine Kodiereinrichtung (6) zur Erzeugung von eine kodierte Information über die in den aufeinanderfolgenden Sendesymbolen (B_i$^j$) der zugeführten modulierten Trägerfrequenzsignale (D) enthaltenen Differenzen zwischen Parameterwerten (Ph$_1$, Ph$_2$, ...Ph$_m$) des Parameters (Ph) und durch eine Dekodiereinrichtung (7) zur Dekodierung der im modulierten Trägerfrequenzsignal (TSM) enthaltenen kodierten Information über die Differenzen zwischen den Parameterwerten (Ph$_1$, Ph$_2$, ...Ph$_m$).

16. Empfänger nach Anspruch 15,
    **dadurch gekennzeichnet,**
    daß die zugeführten modulierten Trägerfrequenzsignale (D) binäre PSK-Signale sind und die Kodiereinrichtung (6) und Dekodiereinrichtung (7) jeweils ein exklusives ODER-Gatter (61, 71) aufweisen.

FIG 1

EP 0 589 390 A1

EP 0 589 390 A1

FIG 2a · FIG 2b · FIG 2c · FIG 2d · FIG 2e · FIG 2f · FIG 2g

FIG 3

FIG 4a

FIG 4b

13

Europäisches
Patentamt

**EUROPÄISCHER RECHERCHENBERICHT**

Nummer der Anmeldung

EP 93 11 5101

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| P,X | Proceedings 18th European Conference on Optical Communication ECOC'92, Berlin, DE, 27.09.-01.10.1992, vol. 3, pages 867-870, Th PD I.5, Berlin, DE; R. NOÉ / E. MEISSNER / B. BORCHERT / H. RODLER: 'Direct modulation 565 Mb/s PSK heterodyne system with solitary SL-QW-DFB lasers and novel suppression of the phase transition periods in the carrier recovery.' * Seite 867, linke Spalte, Zeile 1 – Seite 868, linke Spalte, Absatz 3; Abbildungen * --- | 1-16 | H04L27/22 H04B10/14 |
| P,X | ELECTRONICS LETTERS. Bd. 28, Nr. 25 , 3. Dezember 1992 , LONDON GB Seiten 2266 – 2268 XP332596 E. MEISSNER / R. NOÉ / B. BORCHERT / H. RODLER: 'Direct modulation 565 Mbit/s optical PSK heterodyne system with solitary SL-QW-DFB lasers using novel suppression of phase transition periods in carrier recovery.' * Seite 2267, linke Spalte, Zeile 6 – rechte Spalte, Zeile 5; Abbildungen * --- | 1-16 | |
| X | PATENT ABSTRACTS OF JAPAN vol. 4, no. 56 (E-8)(538) & JP-A-55 025 235 (MITSUBISHI DENKI K.K.) * Zusammenfassung * --- | 1-16 | |
| X | US-A-4 704 582 (DIXON ET AL.) * Zusammenfassung; Ansprüche 1-3; Abbildungen * * Spalte 1, Zeile 6 – Zeile 49 * * Spalte 2, Zeile 45 – Spalte 3, Zeile 48 * --- -/-- | 1-16 | |

RECHERCHIERTE SACHGEBIETE (Int.Cl.5)

H04L
H04B

Der vorliegende Recherchenbericht wurde für alle Patentansprüche erstellt

| Recherchenort | Abschlußdatum der Recherche | Prüfer |
|---|---|---|
| DEN HAAG | 7. Januar 1994 | Gries, T |

EPO FORM 1503 03.82 (P04C03)

**Europäisches Patentamt**

**EUROPÄISCHER RECHERCHENBERICHT**

Nummer der Anmeldung

EP 93 11 5101

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | US-A-3 835 404 (H. NAKAMURA ET AL.)<br>* Abbildungen 1-3 *<br>* Spalte 1, Zeile 64 - Spalte 2, Zeile 68 * | 1-3,5-16 | |
| A | PATENT ABSTRACTS OF JAPAN<br>vol. 4, no. 63 (E-10)(545)<br>& JP-A-55 031 360 (NIPPON DENKI K.K.)<br>* Zusammenfassung * | 9-14 | |
| A | JOURNAL OF OPTICAL COMMUNICATIONS<br>Bd. 12, Nr. 4 , Dezember 1991 , BERLIN DE<br>Seiten 138 - 146 XP273620<br>K. KIASALEH: 'Upper Bounds on the Performance of the MPSK and Differentially Encoded MPSK Coherent Optical Systems Impaired by Laser Phase Noise.'<br>* Zusammenfassung; Abbildungen 1-3 *<br>* Seite 144, rechte Spalte, Zeile 1 - Zeile 17 * | 1,4,15, 16 | |
| A | ELECTRONICS LETTERS.<br>Bd. 25, Nr. 9 , 27. April 1989 , LONDON GB<br>Seiten 588 - 590 XP112090<br>S. WATANABE / T. CHIKAMA ET AL.: '560 Mbit/s Optical PSK Heterodyne Detection using Carrier Recovery.'<br>* Seite 588, Zusammenfassung - Seite 588, rechte Spalte, Zeile 16 *<br>* Abbildung 1 * | 4,15 | |
| A | PATENT ABSTRACTS OF JAPAN<br>vol. 4, no. 36 (E-3)(518)<br>& JP-A-55 006 965 (TOKYO SHIBAURA DENKI K.K.)<br>* Zusammenfassung * | 1 | |

**RECHERCHIERTE SACHGEBIETE (Int.Cl.5)**

Der vorliegende Recherchenbericht wurde für alle Patentansprüche erstellt

| Recherchenort | Abschlußdatum der Recherche | Prüfer |
|---|---|---|
| DEN HAAG | 7. Januar 1994 | Gries, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P04C03)